# EUROPEAN PATENT SPECIFICATION

(11) **EP 4 526 062 B1**
(45) Date of publication and mention of the grant of the patent: **01.07.2026**
(21) Application number: 23722610.5
(22) Date of filing: 24.03.2023
(51) Int. Cl.: F16L 41/02, F16L 41/08, B21D 53/06, B26F 1/00, B21C 37/29, B21D 28/28, B21D 39/04

(54) **METHOD AND DEVICE FOR MAKING A T-BRANCH FOR PIPES**
VERFAHREN UND VORRICHTUNG ZUR HERSTELLUNG EINES T-ZWEIGES FÜR ROHRE
PROCÉDÉ ET DISPOSITIF DE FABRICATION D'UN EMBRANCHEMENT EN T POUR TUYAUX

(30) Priority: 19.05.2022 FI 20225441
(43) Date of publication of application: 26.03.2025
(73) Proprietor: T-Drill Oy, 66400 Laihia (FI)
(72) Inventor: LARIKKA, Leo, 01600 Vantaa (FI)
(74) Representative: LEITZINGER OY
(86) International application number: PCT/FI2023/050168
(87) International publication number: WO 2023/222942

(56) References cited:
- EP-A1- 0 636 434
- EP-A2- 1 270 132
- WO-A1-2016/174300
- WO-A1-2023/025979
- CN-A- 106 964 692
- FI-B- 125 605
- JP-A- 2001 162 335
- US-A- 3 698 274
- US-A1- 2014 151 440

## Description

The invention relates to a method and device for making a T-branch for a pipe by joining the shaped end of the branch pipe with internal welding to the edges of a hole in the main pipe.

The invention also relates to a device that can be used to make the hole in the main pipe required by the method. The aim of the present invention is that a suitable amount of material remains around the hole in the main pipe for welding the parts together from the inside without additional material being brought in from the outside.

The end of the branch pipe is cut into an arc suitable for the main pipe, e.g., using a method and device known from patent publication US 10537948.

There are many ways to make a hole in a pipe to make a branch joint when making a T-branch of a pipe. For relatively small pipes, the most common method is drilling. Drilling produces chips and efficient drilling requires the use of cutting fluid. Chips and fluid are a disadvantage in the production and in the environment, because for butt welding, the chips must be removed and the parts must be cleaned, usually by washing with warm water. In addition, making a hole in a pipe by drilling is a relatively slow production method.

The simplest way to make a hole suitable for making a T-branch is the punching method, where the hole is punched with a round punch perpendicular to the longitudinal axis of the pipe. This works when the branch pipe is a certain amount smaller than the main pipe. The present invention is concerned with such a case. In patent application FI 20217012, a punching method and device are disclosed for making an oval hole in the wall of a pipe having a round cross-section. The hole serves to make the T-branch collar by bending and stretching the edges of the hole into a collar.

The following prior art documents also describes methods and devices by which mechanical work steps of the parts of a T-branch or corresponding joints carried out: US2014/151440A1, US398274A, EP0636434A1, JP2001162335A, EP1270132A2, CN106964692A and FI125605B.

The aim of the invention is to provide a method and device by which the mechanical work steps of the parts of a T-branch can be carried out as a "dry process" without cutting oils and washings, enabling by using the punching method and a device suitable for it making in the main pipe a hole, to the edges of which the shaped end of a branch pipe smaller than the main pipe can be connected directly with internal welding.

In the method according to the invention, in which method the hole in the main pipe and the arcs corresponding to the main pipe at the end of the branch pipe are mechanically cut by removing one solid part from the hole and two solid parts from the end of the branch pipe in a dry mechanical process, in which the cleanliness of the joint areas remains weldable, the main pipe being supported from the outside with retaining jaws, the main pipe being supported from the inside around the hole to be cut with an expandable inner support which is moved into the main pipe, the hole for the branch pipe is cut with a punch, which is moved perpendicularly against the central axis of the main pipe, guided by a guide hole in the second retaining jaw, the inner support is moved away from inside the main pipe, the shaped end of the branch pipe is placed around the hole in the main pipe and the joint seam between the pipes is welded by internal welding without a welding additive.

Examples of a method and device for carrying out internal welding are disclosed in publications US 6433307 (B1), EP 1633520 (B1) and WO 2019166689. Based on these, a person skilled in the art is able to use the invention as regards the feature concerning internal welding.

In the device according to the invention, a specially constructed inner support is used to prevent the shape of the main pipe from changing when the punch penetrates the wall of the main pipe into the punch hole of the inner support. The characteristics of the device are presented in claim 4.

When the branch pipe is smaller than the main pipe by a certain amount, the shape of the edges of the hole in the main pipe can be made to match the shape of the inner surface of the end of the branch pipe, so that the overlapping material thicknesses of the joint seam are suitable for welding the parts together from the inside without any additive brought in from the outside.

Preferred embodiments of the invention are disclosed in the dependent method and device claims.

In the following, the invention will be explained with the help of an exemplary embodiment with reference to the attached drawings, in which:
- Figure 1: shows the basic parts of the device used to carry out the method according to the invention, seen from below.
- Figure 2: shows a cross-section taken from Figure 1 along the line A-A, with added frame 2, linear guide 15 and sliding carriage 16.

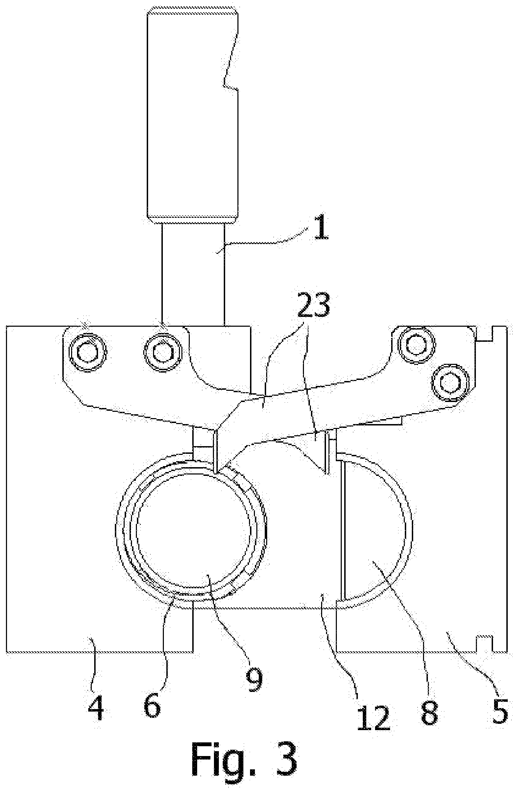

- Figure 3: shows the end view of the device according to Figure 1.
- Figure 4: shows a pipe T-branch made with the method and device according to the invention.

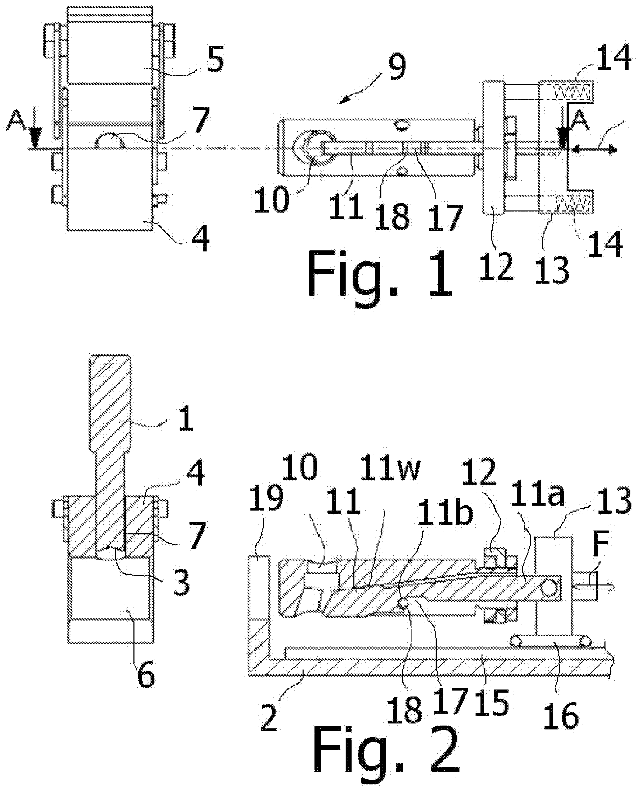

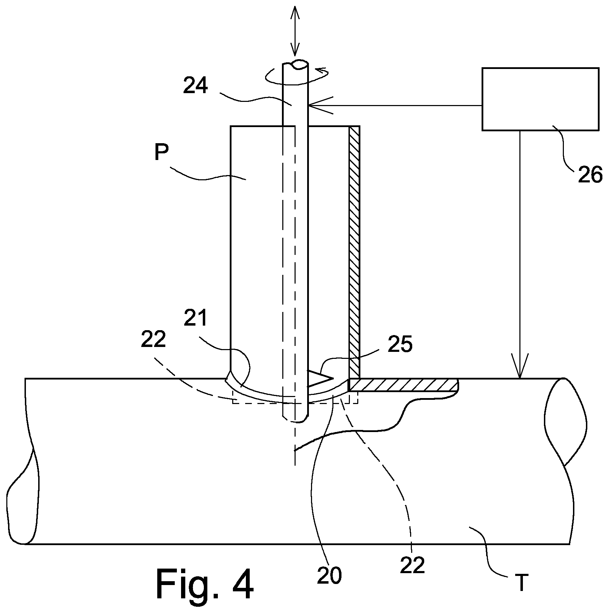

The branch hole 20 (Figure 4) is punched into the main pipe T with punch 1, which is round in cross-section. The cutting blade 3 of punch 1 has a steel edge, the two lowest points of which being at a distance from each other corresponding to the longitudinal direction of the pipe to be punched (Figure 2). In this case, the cutting force is not directed as a shock, but rather as a incision, and the detaching part is shaped and detached in a controlled manner.

During punching, the pipe is supported from the outside with retaining jaws 4, 5. The retaining jaws 4 and 5 include support troughs 6, 8 for receiving the pipe to be punched. The curvature of the support troughs corresponds to the curvature of the outer surface of the main pipe T. In the main pipe supporting position, the retaining jaws 4 and 5 remain slightly separated from each other. The second retaining jaw 5 can be moved back and forth so that the pipe can be placed between the retaining jaws 4 and 5 in the clamping grip of troughs 6 and 8.

The first part 4 of the retaining jaws has a punch guide hole 7 for receiving punch 1. The guide hole 7 has a central axis in the direction of movement of punch 1, which is perpendicular to the central axis of the cylinder formed by the surfaces of the support troughs 6, 8 in the pipe-supporting position. In this case, the central axis of punch 1 is oriented perpendicularly against the central axis of pipe T, when pipe T is between the retaining jaws 4 and 5, supported by support troughs 6, 8 in the pipe-supporting position.

The punching device also comprises an inner support 9 for supporting main pipe T from the inside during punching. The inner support is needed to prevent deformation of the main pipe T to be cut during the cutting situation, when the punch penetrates the wall. The inner support has a punching hole 10 that accommodates punch 1 and expands downwards to allow the detaching piece to fall out of the inner support when inner support 9 is pulled out of the pipe. The inner support 9 must support the pipe close to the outer edge of punch 1, i.e. immediately around punch hole 10. The inner support is round in cross-section and dimensioned to fit loosely inside pipe T. The inner support 9 comprises a longitudinally movable wedge 11, which is arranged to press the upper surface 9 of the inner support against the inner surface of pipe T. Punch 1 is arranged to be inserted into the punch hole 10 when the inner support 9 is in place inside the pipe in the support position. Due to the round shape of the inner support (9), its upper surface rests against the inner surface of the main pipe around punch hole (10).

The inner support 9 is arranged to be moved into and out of the support position by one actuator F, which is arranged to first move the inner support 9 with its wedges 11 to the support position via slider 13, wedge arm 11a and springs 14. The force required for this movement is smaller than the force required to change the shape of springs 14 (compress the compression springs) against the spring force, in which case the springs 14 act as fixed pins pushing fastener 12 of the inner support 9 forward. Wedge arm 11a is attached to slider 13, which is moved back and forth by actuator F. Actuator F is typically a piston cylinder device. In the case shown, two compression springs 14 are attached between fastener 12 and slider 13. Slider 13 is on top of a sliding carriage 16 moving on linear guide 15. The linear guide 15 is supported on frame 2, which is connected to fixed restraints 19, between which the inner support 9 is able to pass. Restraints 19 act as a motion limiter for the inner support 9. When fastener 12 collides with restraints 19 of the frame, actuator F moves only wedge 11 via slider 13 and wedge arm 11a against the force of springs 14, whereby inner support 9 is wedged into the support position. In this case, the inner support 9 is held in the support position by means of fastener 12 leaning against restraint 19. On the sides of slider 13 and fastener 12 there are slide guides (not shown in the figures) attached to frame 2, which support the structure formed by fastener 12 and slider 13.

Wedge 11 has a first wedge surface 11w, which is arranged to press the inner support 9 against the inner surface of the pipe, when actuator F moves the wedge 11 relative to the inner support 9 from right to left in Figure 2. The movement of wedge 11 continues until the inner support 9 rests against the inner surface of the pipe with sufficient force. Punch 1 moves into the punch hole 10 in the inner support 9 when inner support 9 is stationary inside the pipe in the support position. After punching, actuator F pulls the slider 13 and wedge 11 in the opposite direction, whereby the force of springs 14 holds the inner support in place until wedge surface 11w moves sufficiently to release the inner support 9 from the support pressure. A second wedge surface 11b of wedge 11 and pin 18 of the inner support are arranged to lift wedge 11 out of contact with the inner surface of the pipe, when the transfer movement of slider 13 continues from left to right. Wedge 11 has a groove 17 into which pin 18 of the inner support extends. With the help of groove 17 and pin 18, wedge 11 pulls the inner support 9 backwards away from the support position. In the wedging stage, with the help of wedge surface 11w, groove 17 does not limit the movement between the inner support 9 and wedge 11, which continues until the inner support rests against the inner surface of the pipe with sufficient force. In this way, the free end of wedge 11 extends into the expanding lower part of punch hole 10.

In order to make the branch hole to the pipe, punch 1 is guided by guide hole 7 to run perpendicularly against the central axis of the pipe.

Figure 4 illustrates the design of the end of branch pipe P so that it is suitable for connecting by internal welding to hole 20 formed as described above. The cutting depth and curvature of parts 22 to be removed from the end of branch pipe P are adjusted so that the end of branch pipe P sits on the outer surface of main pipe T immediately around the edges of hole 20. In this case, a suitable amount of material to be melted during welding is obtained at the seam.

By using the device described above, a hole can be cut in the main pipe by the following method steps:
- the main pipe is taken in its axial direction between the retaining jaws 4, 5 to the punching position of the main pipe (T);
- the retaining jaws 4, 5 are brought in contact with the main pipe to hold the main pipe in the punching position;
- the inner support 9 and wedge 11 belonging to the inner support are moved into the main pipe;
- transfer motion of the inner support 9 is stopped in a position where the round punch hole 10 in the inner support is located in the trajectory of punch 1 at the hole to be formed in the main pipe;
- movement of wedge 11 in relation to inner support 9 is continued in order to press the inner support against the inner wall of the main pipe (T) around punch hole 10;
- the punch 1 is guided to move, guided by guide hole 7, towards the central axis of the main pipe, whereby the cutting blade 3 of the punch pierces the wall of the main pipe T and removes one solid part from the hole 20 created in the wall into punch hole 10;
- the wedge 11 is moved in the direction opposite to the previous direction of movement in order to release the inner support 9 from the pressure against the inner surface of the main pipe;
- the inner support 9 and wedge 11 are moved away from inside the main pipe;
- the retaining jaws 4, 5 are opened and the punched main pipe is released from the retaining jaws 4, 5.

The punched pipe has to be removed from the retaining jaws 4 and 5 with special extractors 23, which are attached to the retaining jaws. When the retaining jaws 4 and 5 are moved away from each other, hook-like extractors 23 pull the pipe out of the support troughs 6, 8.

Accordingly, punch 1 is used to remove one solid part from the wall of main pipe T. Two curved pieces are also removed from the end of branch pipe P, the curvature of the cutting surface of which corresponding to the curvature of the outer surface of the main pipe. Finally, the shaped end of branch pipe P is placed around hole 20 of the main pipe and joint seam 21 between the pipes is welded with internal welding without welding additive, melting together the materials of the overlapping joint edges. Shown in Figure 4 is an electrode arm 24 and electrode 25, the tip of which is guided along a path following the joint seam 21 by rotating the electrode arm and at the same time moving it back and forth. Power source 26 is used to create a voltage between electrode 25 and the pipes. The voltage is adjusted so that the arc between electrode 25 and the joint seam melts the materials of joint seam 21 into one wall that merges with the walls of pipes T and P.

## Claims

1. A method for making a T-branch for a pipe by joining the shaped end of a branch pipe with internal welding to the edges of a hole in a main pipe, in which the method comprises: the shaped end of the branch pipe (P) is placed around the hole in the main pipe (T) and the joint seam (21) between the pipes is welded by internal welding without a welding additive. and in which said method is **characterized in that** it comprises: the hole in the main pipe (T) and the arcs corresponding to the main pipe at the end of the branch pipe (P) are mechanically cut by removing one solid part from the hole and two (22) solid parts from the end of the branch pipe in a dry mechanical process, in which the cleanliness of the joint areas remains weldable, the main pipe being supported from the outside with retaining jaws (4, 5), the main pipe being supported from the inside around the hole to be cut with an expandable inner support (9, 10, 11) which is moved into the main pipe, the hole (20) for the branch pipe is cut with a punch (1), which is moved perpendicularly against the central axis of the main pipe, guided by a guide hole (7) in the second retaining jaw (4), the inner support (9, 10, 11) is moved away from inside the main pipe.

2. The method according to claim 1, wherein the hole in the main pipe is cut by the following method steps:
- the main pipe is taken in its axial direction between retaining jaws (4, 5) to the punching position of the main pipe (T);
- the retaining jaws (4, 5) are brought in contact with the main pipe to hold the main pipe in the punching position;
- the inner support (9) and wedge (11) belonging to the inner support are moved into the main pipe;
- transfer motion of the inner support (9) is stopped in a position where the round punch hole (10) in the inner support is located in the trajectory of punch (1) at the hole to be formed in the main pipe;
- movement of wedge (11) in relation to the inner support (9) is continued in order to press the inner support against the inner wall of the main pipe (T) around the punch hole (10);
- the punch (1) is guided to move, guided by the guide hole (7), towards the central axis of the main pipe, whereby the cutting blade (3) of the punch pierces the wall of the main pipe and removes one solid part from the hole (20) created in the wall into punch hole (10);
- the wedge (11) is moved in the direction opposite to the previous direction of movement in order to release the inner support (9) from the pressure against the inner surface of the main pipe;
- the inner support (9) and wedge (11) are moved away from inside the main pipe;
- the retaining jaws (4, 5) are opened and the punched main pipe is released from the retaining jaws (4, 5).

3. The method according to claim 2, **characterized in that** the inner support (9) is pressed against the inner surface of the pipe with wedge (11), which is moved back and forth in relation to the inner support (9) with the same actuator (F) that moves the inner support (9) into and out of the support position, and that the inner support (9) is first moved with its wedge (11) to the support position via the wedge arm (11a) and spring (14) and then to the support position by only moving the wedge (11) via wedge arm (11a) against the force of said spring (14).

4. A device for making a branch hole in a pipe, wherein the device comprises a punch (1), which is round in cross-section, a cutting blade (3) at the end of the punch, the guide hole (7) having in the direction of movement of punch (1) a central axis, which is in the pipe support position perpendicular to the central axis of the cylinder formed by the surfaces of the support troughs (6, 8), and an inner support (9) to support the pipe from the inside during the punch, the inner support comprising a round punch hole the inner support (9) comprises a longitudinally movable wedge (11), which is arranged to press the inner support (9) against the inner surface of the pipe, and that the punch (1) is arranged to be inserted into the punch hole (10) when the inner support (9) is in place inside the pipe in the support position, the inner support (9) being designed to have its upper surface resting against the inner surface of the main pipe around the punch hole (10), said device is **characterized in that** it comprises retaining jaws (4, 5) for supporting the pipe from the outside during the punch, the retaining jaws comprising support troughs (6, 8) for receiving the pipe to be punched, the punch guide hole (7) receiving the punch (1) in the first part (4) of the retaining jaws, the inner support (9) is arranged to be moved into the main pipe and away from inside the main pipe so that the hole in the main pipe can be cut by the following method steps:
- the main pipe is taken in its axial direction between retaining jaws (4, 5) to the punching position of the main pipe (T);
- the retaining jaws (4, 5) are brought in contact with the main pipe to hold the main pipe in the punching position;
- the inner support (9) and wedge (11) belonging to the inner support are moved into the main pipe;
- transfer motion of the inner support (9) is stopped in a position where the round punch hole (10) in the inner support is located in the trajectory of punch (1) at the hole to be formed in the main pipe;
- movement of wedge (11) in relation to the inner support (9) is continued in order to press the inner support against the inner wall of the main pipe (T) around the punch hole (10);
- the punch (1) is guided to move, guided by the guide hole (7), towards the central axis of the main pipe, whereby the cutting blade (3) of the punch pierces the wall of the main pipe and removes one solid part from the hole (20) created in the wall into punch hole (10);
- the wedge (11) is moved in the direction opposite to the previous direction of movement in order to release the inner support (9) from the pressure against the inner surface of the main pipe;
- the inner support (9) and wedge (11) are moved away from inside the main pipe;
- the retaining jaws (4, 5) are opened and the punched main pipe is released from the retaining jaws (4, 5).

5. The device according to claim 4, **characterized in that** the cutting blade (3) of the punch (1) has a steel edge, the two lowest points of which being at a distance from each other corresponding to the longitudinal direction of the pipe.

6. The device according to claim 4, **characterized in that** the inner support (9) is arranged to be moved into and out of the support position by one actuator F, which is arranged to first move the inner support (9) with its wedge (11) into the support position via the wedge arm (11a) and spring (14) and then move only wedge (11) via the wedge arm (11a) against the force of said spring (14), whereby the inner support (9) is wedged into the support position.

7. The device according to claim 4 or claim 6, **characterized in that** the wedge (11) has a first wedge surface (11w), which is arranged to press the inner support (9) against the inner surface of the pipe, and another wedge surface (11b), which is arranged to lift the wedge (11) from the inner surface of the pipe.

## Patentansprüche

1. Verfahren zum Herstellen eines T-Abzweigstücks für ein Rohr durch Verbinden des geformten Endes eines Abzweigrohrs durch Innenverschweißen mit den Rändern eines Lochs in einem Hauptrohr, wobei das Verfahren Folgendes umfasst:
das geformte Ende des Abzweigrohrs (P) wird um das Loch in dem Hauptrohr (T) platziert und die Verbindungsnaht (21) zwischen den Rohren wird durch Innenverschweißen ohne Schweißzusatz verschweißt und wobei das Verfahren **dadurch gekennzeichnet ist, dass** es Folgendes umfasst:
das Loch in dem Hauptrohr (T) und die Bögen entsprechend des Hauptrohrs am Ende des Abzweigrohrs (P) werden mechanisch geschnitten, indem ein fester Teil von dem Loch und zwei (22) feste Teile von dem Ende des Abzweigrohrs in einem trockenen mechanischen Verfahren entfernt werden, wobei die Reinheit der Verbindungsbereiche schweißbar bleibt, das Hauptrohr von außen mittels Haltebacken (4, 5) gehalten wird, das Hauptrohr von innen um das Loch, das geschnitten werden soll, mittels einer erweiterbaren Innenstütze (9, 10, 11), die in das Hauptrohr eingeführt wird, gehalten wird, das Loch (20) für das Abzweigrohr mit einer Stanze (1), die senkrecht geführt durch ein Führungsloch (7) in der zweiten Halterbacke (4) gegen die Mittenachse des Hauptrohrs bewegt wird, geschnitten wird, die Innenstütze (9, 10, 11) von der Innenseite des Hauptrohrs weg bewegt wird.

2. Verfahren nach Anspruch 1, wobei das Loch in dem Hauptrohr mittels der folgenden Verfahrensschritte geschnitten wird:
- das Hauptrohr wird in seiner Axialrichtung zwischen den Haltebacken (4, 5) zu der Stanzposition des Hauptrohrs (T) geführt;
- die Haltebacken (4, 5) werden in Berührung mit dem Hauptrohr gebracht, um das Hauptrohr in der Stanzposition zu halten;
- die Innenstütze (9) und der Keil (11), der zu der Innenstütze gehört, werden in das Hauptrohr eingeführt;
- Übertragungsbewegung der Innenstütze (9) wird in einer Position angehalten, wo das runde Stanzloch (10) in der Innenstütze sich in der Verlaufsbahn der Stanze (1) an dem Loch, das in dem Hauptrohr gebildet werden soll, befindet;
- Bewegung des Keils (11) bezüglich der Innenstütze (9) wird fortgesetzt, um die Innenstütze gegen die Innenwand des Hauptrohrs (T) um das Stanzloch (10) zu drücken;
- die Stanze (1) wird geführt mittels des Führungslochs (7) geführt, sich zu der Mittenachse des Hauptrohrs zu bewegen, wobei das Schneidmesser (3) der Stanze die Wand des Hauptrohrs durchdringt und einen festen Teil aus dem Loch (20), das in der Wand in das Stanzloch (10) erzeugt wird, entfernt;
- der Keil (11) wird in die Richtung entgegengesetzt der vorherigen Bewegungsrichtung bewegt, um die Innenstütze (9) aus dem Druck gegen die Innenfläche des Hauptrohrs zu lösen;
- die Innenstütze (9) und der Keil (11) werden von innerhalb des Hauptrohrs weg bewegt;
- die Haltebacken (4, 5) werden geöffnet und das gestanzte Hauptrohr wird von den Haltebacken (4, 5) gelöst.

3. Verfahren nach Anspruch 2, **dadurch gekennzeichnet, dass** die Innenstütze (9) mittels des Keils (11) gegen die Innenfläche des Rohrs gedrückt wird, der bezüglich der Innenstütze (9) mittels desselben Aktuators (F), der die Innenstütze (9) in die und aus der Halteposition bewegt, vor und zurück bewegt wird, und dadurch, dass die Innenstütze (9) erst mit ihrem Keil (11) über den Keilarm (11a) und die Feder (14) in die Halteposition und dann nur durch Bewegen nur des Keils (11) über den Keilarm (11a) gegen die Kraft der Feder (14) in die Halteposition bewegt wird.

4. Vorrichtung zum Erzeugen eines Abzweigungslochs in einem Rohr, wobei die Vorrichtung eine Stanze (1), die im Querschnitt rund ist, ein Schneidmesser (3) am Ende der Stanze, das Führungsloch (7), das in der Bewegungsrichtung der Stanze (1) eine Mittelachse aufweist, die sich in der Rohrstützposition senkrecht zu der Mittenachse des Zylinders, der durch die Flächen der Stützmulden (6, 8) gebildet wird, befindet, und eine Innenstütze (9) zum Halten des Rohrs von innen während des Stanzens, wobei die Innenstütze ein rundes Stanzloch aufweist, aufweist, wobei de Innenstütze (9) einen längsförmigen beweglichen Keil (11), der derart angeordnet ist, die Innenstützte (9) gegen die Innenfläche des Rohrs zu drücken, und dass die Stanze (1) derart angeordnet ist, in das Stanzloch (10) eingeführt zu werden, wenn sich die Innenstützte (9) innerhalb des Rohrs in der Halteposition befindet, aufweist, wobei die Innenstützte (9) derart ausgelegt ist, dass ihre obere Fläche an der Innenfläche des Hauptrohrs um das Stanzloch (10) anliegt, wobei die Vorrichtung **dadurch gekennzeichnet ist, dass** sie Haltebacken (4, 5) zum Halten des Rohrs von außen während des Stanzens aufweist, wobei die Haltebacken Stützmulden (6, 8) zum Aufnahmen des Rohrs, das gestanzt werden soll, aufweist, wobei das Stanzführungsloch (7) die Stanze in dem ersten Teil (4) der Haltebacken aufnimmt, die Innenstütze (9) derart angeordnet ist, in das Hauptrohr eingeführt und weg von der Innenseite des Hauptrohrs geführt zu werden, sodass das Loch in dem Hautrohr durch die folgenden Verfahrensschritte geschnitten werden kann:
- das Hauptrohr wird in seiner Axialrichtung zwischen den Haltebacken (4, 5) zu der Stanzposition des Hauptrohrs (T) geführt;
- die Haltebacken (4, 5) werden in Berührung mit dem Hauptrohr gebracht, um das Hauptrohr in der Stanzposition zu halten;
- die Innenstütze (9) und der Keil (11), der zu der Innenstütze gehört, werden in das Hauptrohr eingeführt;
- Übertragungsbewegung der Innenstütze (9) wird in einer Position angehalten, wo das runde Stanzloch (10) in der Innenstütze sich in der Verlaufsbahn der Stanze (1) an dem Loch, das in dem Hauptrohr gebildet werden soll, befindet;
- Bewegung des Keils (11) bezüglich der Innenstütze (9) wird fortgesetzt, um die Innenstütze gegen die Innenwand des Hauptrohrs (T) um das Stanzloch (10) zu drücken;
- die Stanze (1) wird geführt mittels des Führungslochs (7) geführt, sich zu der Mittenachse des Hauptrohrs zu bewegen, wobei das Schneidmesser (3) der Stanze die Wand des Hauptrohrs durchdringt und einen festen Teil aus dem Loch (20), das in der Wand in das Stanzloch (10) erzeugt wird, entfernt;
- der Keil (11) wird in die Richtung entgegengesetzt der vorherigen Bewegungsrichtung bewegt, um die Innenstütze (9) aus dem Druck gegen die Innenfläche des Hauptrohrs zu lösen;
- die Innenstütze (9) und der Keil (11) werden von innerhalb des Hauptrohrs weg bewegt;
- die Haltebacken (4, 5) werden geöffnet und das gestanzte Hauptrohr wird von den Haltebacken (4, 5) gelöst.

5. Vorrichtung nach Anspruch 4, **dadurch gekennzeichnet, dass** das Schneidmesser (3) der Stanze (1) eine Stahlkante aufweist, wobei sich die zwei untersten Stellen davon in einem Abstand voneinander entsprechend der Längsrichtung des Rohrs befinden.

6. Vorrichtung nach Anspruch 4, **dadurch gekennzeichnet, dass** die Innenstütze (9) derart angeordnet ist, durch einen Aktuator F, der derart angeordnet ist, erst die Innenstütze (9) mit ihrem Keil (11) über den Keilarm (11a) und die Feder (14) in die Halteposition zu bewegen und dann nur den Keil (11) über den Keilarm (11a) gegen die Kraft der Feder (14) zu bewegen, wodurch die Innenstütze (9) in die Halteposition geklemmt wird, in eine und aus der Halteposition bewegt zu werden.

7. Vorrichtung nach Anspruch 4 oder Anspruch 6, **dadurch gekennzeichnet, dass** der Keil (11) eine erste Keilfläche (11w), die derart angeordnet ist, die Innenstütze (9) gegen die Innenfläche des Rohrs zu drücken, und eine weitere Keilfläche (11b), die derart angeordnet ist, den Keil (11) von der Innenseite des Rohrs zu heben, aufweist.

## Revendications

1. Procédé de fabrication d'un embranchement en T pour un tuyau par raccordement de l'extrémité façonnée d'un tuyau d'embranchement avec soudure interne aux bords d'un trou dans un tuyau principal, le procédé comprenant :
l'extrémité façonnée du tuyau d'embranchement (P) est placée autour du trou dans le tuyau principal (T) et le joint d'assemblage (21) entre les tuyaux est soudé par soudure interne sans matériau d'apport pour soudure, et le procédé étant **caractérisé en ce qu'**il comprend :
le trou dans le tuyau principal (T) et les arcs correspondant au tuyau principal à l'extrémité du tuyau d'embranchement (P) sont découpés mécaniquement par retrait d'une partie solide à partir du trou et de deux parties solides (22) à partir de l'extrémité du tuyau d'embranchement à l'aide d'un processus mécanique par voie sèche, dans lequel la propreté des zones d'assemblage permet la soudure, le tuyau principal étant supporté depuis l'extérieur par des mâchoires de retenue (4, 5), le tuyau principal étant supporté depuis l'intérieur, autour du trou à découper, par un support interne déployable (9, 10, 11) déplacé dans le tuyau principal, le trou (20) pour le tuyau d'embranchement étant découpé à l'aide d'un poinçon (1), lequel est déplacé perpendiculairement contre l'axe central du tuyau principal, guidé par un trou de guidage (7) dans la deuxième mâchoire de retenue (4), le support interne (9, 10, 11) étant éloigné de l'intérieur du tuyau principal.

2. Procédé selon la revendication 1, dans lequel le trou dans le tuyau principal est découpé à l'aide des étapes de procédé suivantes :
- le tuyau principal est amené dans sa direction axiale entre les mâchoires de retenue (4, 5) vers la position de poinçonnage du tuyau principal (T) ;
- les mâchoires de retenue (4, 5) sont mises en contact avec le tuyau principal pour maintenir le tuyau principal dans la position de poinçonnage ;
- le support interne (9) et la cale (11) appartenant au support interne sont déplacés vers l'intérieur du tuyau principal ;
- un mouvement de transfert du support interne (9) est arrêté dans une position où le trou de poinçonnage (10) rond dans le support interne se situe sur la trajectoire du poinçon (1) au niveau du trou à former dans le tuyau principal ;
- le déplacement de la cale (11) par rapport au support interne (9) est poursuivi afin de comprimer le support interne contre la paroi interne du tuyau principal (T) autour du trou de poinçonnage (10) ;
- le poinçon (1) est guidé pour se déplacer, guidé par le trou de guidage (7), vers l'axe central du tuyau principal, moyennant quoi la lame de coupe (3) du poinçon perce la paroi du tuyau principal et retire une partie solide du trou à partir du trou (20) créé dans la paroi vers le trou de poinçonnage (10) ;
- la cale (11) est déplacée dans la direction opposée à la direction de déplacement précédente afin de libérer le support interne (9) de la pression contre la surface intérieure du tuyau principal ;
- le support interne (9) et la cale (11) sont éloignés de l'intérieur du tuyau principal ;
- les mâchoires de retenue (4, 5) sont ouvertes et le tuyau principal poinçonné est libéré des mâchoires de retenue (4, 5).

3. Procédé selon la revendication 2, **caractérisé en ce que** le support interne (9) est pressé contre la surface intérieure du tuyau avec la cale (11), laquelle est déplacée vers l'arrière et l'avant par rapport au support interne (9) par le même actionneur (F) chargé de déplacer le support interne (9) vers la position de support et hors de celle-ci, et **en ce que** le support interne (9) est tout d'abord déplacé avec sa cale (11) vers la position de support par le biais du bras de cale (11a) et d'un ressort (14), puis vers la position de support par déplacement uniquement de la cale (11) par le biais du bras de cale (11a) contre la force dudit ressort (14).

4. Dispositif de fabrication d'un trou d'embranchement dans un tuyau, le dispositif comprenant un poinçon (1) présentant une section transversale ronde, une lame de coupe (3) située à l'extrémité du poinçon, le trou de guidage (7) comportant, dans la direction de déplacement du poinçon (1), un axe central, lequel est, dans la position de support du tuyau, perpendiculaire à l'axe central du cylindre formé par les surfaces des creux de support (6, 8), et un support interne (9) destiné à supporter le tuyau depuis l'intérieur pendant le poinçonnage, le support interne comprenant un trou de poinçonnage rond, le support interne (9) comprenant une cale (11) déplaçable de façon longitudinale, laquelle est conçue pour presser le support interne (9) contre la surface intérieure du tuyau, et le poinçon (1) étant conçu pour être inséré dans le trou de poinçonnage (10) lorsque le support interne (9) est en place à l'intérieur du tuyau dans la position de support, le support interne (9) étant réalisé de telle façon que sa surface supérieure repose contre la surface intérieure du tuyau principal autour du trou de poinçonnage (10), ledit dispositif étant **caractérisé en ce qu'**il comprend des mâchoires de retenue (4, 5) destinées à supporter le tuyau depuis l'extérieur pendant le poinçonnage, les mâchoires de retenue comprenant des creux de support (6, 8) destinés à recevoir le tuyau à poinçonner, le trou de guidage de poinçon (7) recevant le poinçon (1) dans la première partie (4) des mâchoires de retenue, le support interne (9) étant conçu pour être déplacé à l'intérieur du tuyau principal et éloigné de l'intérieur du tuyau principal, de sorte que le trou dans le tuyau principal peut être découpé à l'aide des étapes de procédé suivantes :
- le tuyau principal est amené dans sa direction axiale entre les mâchoires de retenue (4, 5) vers la position de poinçonnage du tuyau principal (T) ;
- les mâchoires de retenue (4, 5) sont mises en contact avec le tuyau principal pour maintenir le tuyau principal dans la position de poinçonnage ;
- le support interne (9) et la cale (11) appartenant au support interne sont déplacés vers l'intérieur du tuyau principal ;
- un mouvement de transfert du support interne (9) est arrêté à une position où le trou de poinçonnage (10) rond dans le support interne se situe sur la trajectoire du poinçon (1) au niveau du trou à former dans le tuyau principal ;
- le déplacement de la cale (11) par rapport au support interne (9) est poursuivi afin de comprimer le support interne contre la paroi interne du tuyau principal (T) autour du trou de poinçonnage (10) ;
- le poinçon (1) est guidé pour se déplacer, guidé par le trou de guidage (7), vers l'axe central du tuyau principal, moyennant quoi la lame de coupe (3) du poinçon perce la paroi du tuyau principal et retire une partie solide du trou à partir du trou (20) créé dans la paroi vers le trou de poinçonnage (10) ;
- la cale (11) est déplacée dans la direction opposée à la direction de déplacement précédente afin de libérer le support interne (9) de la pression contre la surface intérieure du tuyau principal ;
- le support interne (9) et la cale (11) sont éloignés de l'intérieur du tuyau principal ;
- les mâchoires de retenue (4, 5) sont ouvertes et le tuyau principal poinçonné est libéré des mâchoires de retenue (4, 5).

5. Dispositif selon la revendication 4, **caractérisé en ce que** la lame de coupe (3) du poinçon (1) comporte un bord en acier, dont les deux points les plus bas se trouvent à une distance l'un de l'autre correspondant à la direction longitudinale du tuyau.

6. Dispositif selon la revendication 4, **caractérisé en ce que** le support interne (9) est conçu pour être déplacé vers la position de support et hors de celle-ci à l'aide d'un actionneur F, lequel est conçu pour déplacer tout d'abord le support interne (9) avec sa cale (11) vers la position de support par le biais du bras de cale (11a) et d'un ressort (14) et pour déplacer ensuite uniquement la cale (11) par le biais du bras de cale (11a) contre la force dudit ressort (14), moyennant quoi le support interne (9) est calé dans la position de support.

7. Dispositif selon la revendication 4 ou la revendication 6, **caractérisé en ce que** la cale (11) comporte une première surface de cale (11w), laquelle est conçue pour presser le support interne (9) contre la surface intérieure du tuyau, et une autre surface de cale (11b), laquelle est conçue pour relever la cale (11) par rapport à la surface intérieure du tuyau.
